## Europäisches Patentamt

## European Patent Office

## Office européen des brevets

(19)

(11) Veröffentlichungsnummer: **0 217 117**
**B1**

(12) **EUROPÄISCHE PATENTSCHRIFT**

(45) Veröffentlichungstag der Patentschrift:
**08.06.88**

(51) Int. Cl.⁴: **B 64 C 1/10, B 64 D 25/00**

(21) Anmeldenummer: **86111722.4**

(22) Anmeldetag: **25.08.86**

(54) **Druckwand für einen unter inneren Druck setzbaren Rumpf eines Luftfahrzeuges.**

(30) Priorität: **28.09.85 DE 3534719**

(43) Veröffentlichungstag der Anmeldung:
**08.04.87 Patentblatt 87/15**

(45) Bekanntmachung des Hinweises auf die Patenterteilung:
**08.06.88 Patentblatt 88/23**

(84) Benannte Vertragsstaaten:
**AT BE CH FR GB IT LI LU NL SE**

(56) Entgegenhaltungen:
**DE-A-2 913 050**
**FR-A-2 320 864**
**US-A-2 669 402**
**US-A-4 055 317**

(73) Patentinhaber: **Messerschmitt- Bölkow- Blohm Gesellschaft mit beschränkter Haftung, Robert- Koch- Strasse, D-8012 Ottobrunn (DE)**

(72) Erfinder: **Stephen, Gerhard, Tessiner Strasse 103, D-2800 Bremen (DE)**
Erfinder: **Wrobel, Joachim, Allerstrasse 58, D-2806 Oyten (DE)**

## Beschreibung

### Druckwand für einen unter inneren Überdruck setzbaren Rumpf eines Luftfahrzeuges

Die Erfindung bezieht sich auf eine Druckwand für einen unter inneren Überdruck setzbaren Rumpf eines Luftfahrzeuges, insbesondere Heckschale zum Abschluß des Passagierraumes eines Verkehrsflugzeuges, wie sie z. B. durch die US-A-4 055 317 bekannt ist.

Bei Flugzeugen, insbesondere Verkehrsflugzeugen, ist es notwendig, einen dem Normaldruck entsprechenden Luftdruck im Passagierraum aufrecht zu erhalten. Das bedeutet, daß solche Flugzeuge beim Fliegen einen inneren Überdruck gegenüber dem Außenbereich und bestimmten abgeschotteten Bereichen des Flugzeuges besitzen. Um diesen Überdruck aufrecht zu erhalten, ist es notwendig, den Rumpf entsprechend auszulegen und für den Passagierraum nicht erforderliche Rumpfbereiche mit Druckwänden druckdicht abzuschotten.

Es ist daher bei Passagierflugzeugen üblich, den Passagierraum mit einer auch als Heckschale bezeichneten Druckwand heckseitig abzuschließen. Auf diesen Heckschalen lastet im Flug trotz eines relativ kleinen Überdrucks von ca. 0,5 bar eine relativ große, von der Fläche abhängige Last. Daher können insbesondere bei Großraumflugzeugen sehr große Kräfte auftreten. Diese Kräfte werden normalerweise von der Rumpfstruktur des Flugzeuges aufgenommen, aber bei einem Schaden, insbesondere einem Leck, kann das plötzliche Entweichen der Luft aus dem Passagierraum eine die Sicherheit des Flugzeuges beeinträchtigende Wirkung haben, wie jüngste Erfahrungen bewiesen haben.

Der Erfindung liegt daher die Aufgabe zugrunde, eine Druckwand der eingangs genannten Art vorzusehen, bei der ein Schaden, insbesondere ein Leck, ohne Einfluß auf die Sicherheit des Flugzeuges bleibt. Diese Aufgabe ist erfindungsgemäß dadurch gelöst, daß der Druckwand auf der Unterdruckseite eine als Sicherheitseinrichtung wirkende Haltevorrichtung nachgeordnet ist.

Die erfindungsgemäße Haltevorrichtung ist in der Lage, eine Druckwand, insbesondere eine Heckschale abzustützen und wirkt dadurch wie eine Sicherheitseinrichtung. Dabei ist es zweckmäßig, die Haltevorrichtung aus einem am Rumpf befestigten, mit Spannung gegen die Druckwand sich legenden, engmaschigen Netz auszubilden. Hierbei kann das Netz aus verflochtenen Gurten bestehen, die zum Beispiel aus Kunststoffasern hergestellt sind. Zwischen dem Netz und der Druckwand können darüber hinaus gleichmäßig verteilte Abstandshalter angeordnet werden.

Die Erfindung wird anhand der beiliegenden Zeichnung näher erläutert. Es zeigen:
Fig. 1　den Heckbereich eines Luftfahrzeuges,
Fig. 2　eine Draufsicht auf eine Heckschale mit einer Haltevorrichtung,
Fig. 3　einen Schnitt III-III gemäß Fig. 2 und
Fig. 4　eine vergrößerte Ansicht IV gemäß Fig. 3.

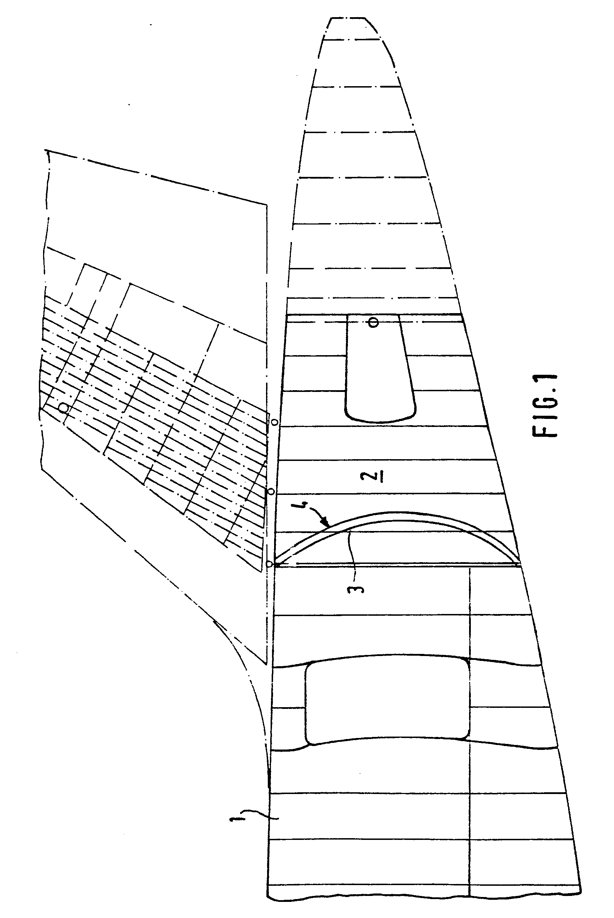

Wie die Darstellung nach Fig. 1 zeigt, ist der Heckbereich 2 eines Luftfahrzeuges 1, zum Beispiel eines Großraumpassagierflugzeuges, mit einer auch als Heckschale 3 bezeichneten Druckwand abgeschottet. Diese Heckschale 3 hat die Form einer Kalotte, der auf der Unterdruckseite eine Haltevorrichtung 4 nachgeordnet ist.

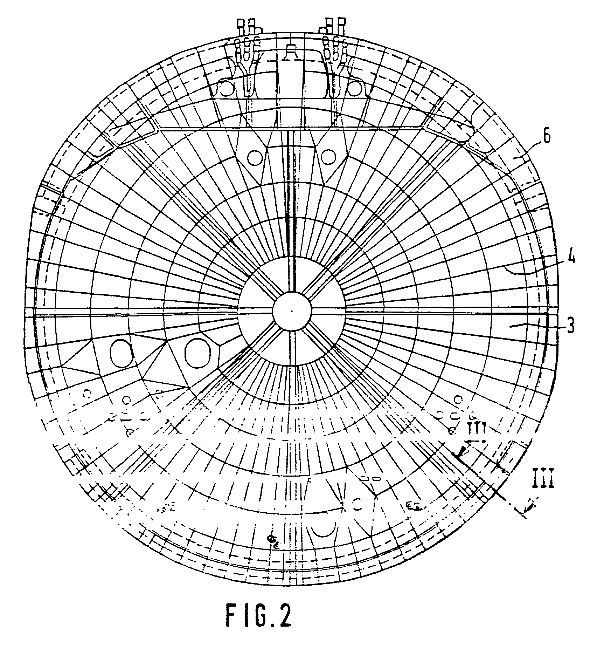

Fig. 2 zeigt eine Draufsicht auf eine Heckschale 3 von der Unterdruckseite mit einer als Netz ausgebildeten Haltevorrichtung 4. Das Netz kann aus verflochetenen Gurten hergestellt sein, die aus Kunststoffasern oder anderen geeigneten Werkstoffen bestehen.

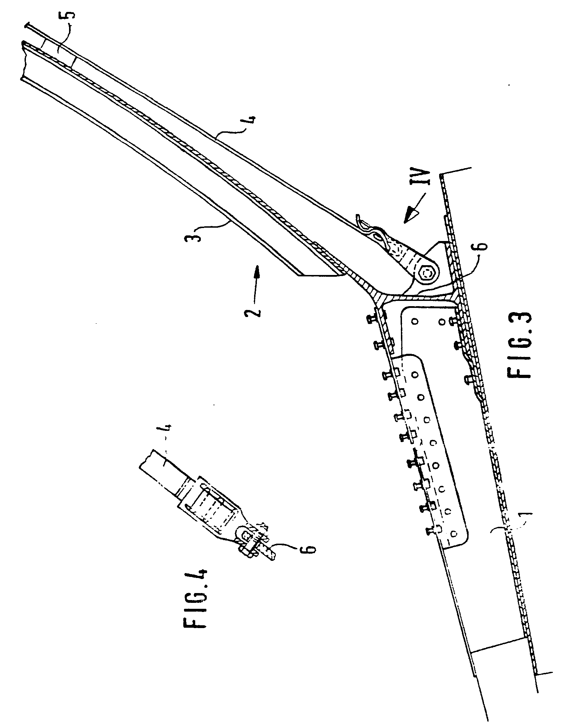

Wie aus der Darstellung nach Fig. 3 hervorgeht, welche einen vergrößerten Schnitt III-III gemäß Fig. 2 zeigt, sind zwischen dem Netz und der Heckschale 3 gleichmäßig verteilte elastische Abstandshalter 5 angeordnet. Hierdurch wird eine gleichmäßige Netzspannung erzielt, ohne das Netz mit den beim Flug auftretenden Lastwechseln zu beaufschlagen.

Die Darstellungen nach Fig. 3 und Fig. 4 zeigen auch die Befestigung der Netzgurte am Flugzeugrumpf, und zwar an den Spanten, an denen die Heckschale 3 befestigt ist.

Die erfindungsgemäße, als Netz ausgebildete Haltevorrichtung 4 hat den Vorteil, bei einem Schaden in einer Druckwand diese durch eine Vielzahl gleichmäßig verteilter Einleitungspunkte abzustützen. Hierdurch werden insbesondere Brüche in der Druckwand und Störungen in den für den Betrieb des Flugzeuges notwendigen Einrichtungen verhindert und damit die Sicherheit des Flugzeuges gewährleistet.

## Patentansprüche

1. Druckwand für einen unter inneren Überdruck setzbaren Rumpf eines Luftfahrzeuges, insbesondere Heckschale zum Abschluß des Passagierraumes eines Verkehrsflugzeuges, dadurch gekennzeichnet, daß der Druckwand (3) auf der Unterdruckseite eine als Sicherheitseinrichtung wirkende Haltevorrichtung (4) nachgeordnet ist.

2. Druckwand nach Anspruch 1, dadurch gekennzeichnet, daß die Haltevorrichtung (4) aus einem an Rumpfspanten (6) befestigten, mit Spannung gegen die Druckwand (3) sich legen den engmaschigen Netz besteht.

3. Druckwand nach Anspruch 2, dadurch gekennzeichnet, daß das Netz aus verflochtenen Gurten besteht.

4. Druckwand nach Anspruch 3, dadurch gekennzeichnet, daß die Gurte aus Kunststoffasern hergestellt sind.

5. Druckwand nach einem der Ansprüche 2 bis 4, dadurch gekennzeichnet, daß zwischen dem

**0 217 117**

Netz und der Druckwand (3) gleichmäßig verteilte elastische Abstandshalter (5) angeordnet sind.

## Claims

1. A pressure wall for an aircraft fuselage which is subject to interior overpressure, especially a tail structure for sealing off the passenger compartment of an airliner, characterised in that the pressure wall (3) on the underpressure side is arranged behind a holding device (4) acting as a safety arrangement.

2. A pressure wall according to Claim 1, characterised in that the holding device (4) comprises a fine-meshed net fixed to transverse frames (6) of the fuselage and lying under tension against the pressure wall (3).

3. A pressure wall according to Claim 2, characterized in that the net consists of interwoven straps.

4. A pressure wall according to Claim 3, characterized in that the straps are manufactured from synthetic fibres.

5. A pressure wall according to any one of Claims 2 to 4 characterised in that between the net and the pressure wall (3) there are arranged uniformly distributed elastic spaces (5).

## Revendications

1. Bouclier de pression pour le fuselage d'un aéronef, dont l'intérieur est susceptible d'être pressurisé, notamment bouclier arrière destiné à fermer la partie occupée par les passagers d'un avion de transport, bouclier (3) caractérisé en ce qu'il comporte un dispositif de maintien (4) fonctionnant comme installation de sécurité du côté de la dépression.

2. Bouclier de pression selon la revendication 1, caractérisé en ce que le dispositif de maintien (4) se compose d'un filet à petites mailles s'appliquant sous tension contre le bouclier de pression (3) et fixé aux nervures (6) du fuselage.

3. Bouclier de pression selon la revendication 2, caractérisé en ce que le filet est constitué par un pressage de courroies.

4. Bouclier de pression selon la revendication 3, caractérisé en ce que les courroies sont en fibres de matière synthétique.

5. Bouclier de pression selon l'une des revendications 2 à 4, caractérisé par des organes d'écartement (5), élastiques, répartis régulièrement entre le filet et le bouclier (3).

FIG.1

FIG.2

FIG.4

FIG.3

0 217 117